(19) **Europäisches Patentamt / European Patent Office / Office européen des brevets**

(11) **EP 4 474 414 A1**

(12) # DEMANDE DE BREVET EUROPEEN

(43) Date de publication:
**11.12.2024 Bulletin 2024/50**

(21) Numéro de dépôt: **24164544.9**

(22) Date de dépôt: **19.03.2024**

(51) Classification Internationale des Brevets (IPC):
**C08J 11/06** (2006.01)  **B01D 11/02** (2006.01)
**B29B 17/02** (2006.01)  **C08J 11/08** (2006.01)
**B29B 13/10** (2006.01)

(52) Classification Coopérative des Brevets (CPC):
**C08J 11/08; B01D 11/0203; B29B 13/00;**
**B29B 17/02;** B29B 17/0404; B29B 2013/002;
B29B 2017/0293; B29K 2023/00; C08J 2323/02

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **27.03.2023 FR 2302907**

(71) Demandeur: **Paprec Plastiques**
**75008 Paris (FR)**

(72) Inventeurs:
- **PETITHUGUENIN, Sébastien**
  **75008 Paris (FR)**
- **KOFYAN, Charles**
  **44800 SAINT HERBLAIN (FR)**
- **van den Broek d Obrenan, Ghislain**
  **44800 SAINT HERBLAIN (FR)**

(74) Mandataire: **Cabinet Camus Lebkiri**
**25 rue de Maubeuge**
**75009 Paris (FR)**

(54) ## PROCÉDÉ DE DÉCONTAMINATION DE POLYMERE

(57) L'invention concerne un procédé (100) de décontamination d'une composition solide dite contaminée (C0) issue de déchet post-consommation comprenant les étapes successives suivantes :
- Réduction par micronisation (S102) de la composition solide contaminée (C0) en particules (P) ayant un diamètre compris entre 0,1 et 1 mm, pour obtenir une poudre (C1) comprenant le polymère (PL) et les contaminants (CONT),
- Introduction, dans un extracteur (10) chargé en poudre (C1), d'un écoulement continu d'un fluide supercritique (F), l'extracteur (10) étant simultanément maintenu à une température comprise entre 40°C et 130°C et une pression comprise entre 80 et 450 bars pendant une durée comprise entre 5 et 240 min, pour extraire (S104) physiquement les contaminants (CONT) par le fluide supercritique (F) et obtenir une composition solide dite décontaminée (C2) comprenant le polymère (PL),

[Fig. 1]

**Description**

**DOMAINE TECHNIQUE DE L'INVENTION**

Le domaine technique de l'invention est celui des technologies de recyclage des déchets plastiques de post-consommation et de post-industrialisation, et en particulier celui des technologies de recyclage de polymères issus de la post-consommation et de la post-industrialisation, tels que les polyoléfines.

La présente invention concerne un procédé de décontamination de polymères tels que les polyoléfines par extraction par un fluide supercritique pour produire des polyoléfines recyclées de haute pureté.

**ARRIERE-PLAN TECHNOLOGIQUE DE L'INVENTION**

Les polyoléfines sont des polymères très présents dans les déchets plastiques.

Les polyoléfines sont en particulier très utilisées dans divers biens de consommation et, plus généralement, dans l'emballage alimentaire, par exemple comme un type de pellicule rétractable.

Actuellement, certaines polyoléfines, comme le polypropylène (PP) ou le polyéthylène (PE), ne sont pas utilisées après leur recyclage pour des usages alimentaires, ou encore médicaux et cosmétiques, ce qui constitue un obstacle majeur à la mise en oeuvre d'une économie circulaire du plastique.

Pour surmonter cet obstacle, il y a un besoin de mieux purifier les polyoléfines, et plus généralement les polymères, au cours du recyclage, de sorte qu'ils contiennent une quantité de polluants, ou contaminants, qui ne soit pas à risque pour la santé humaine.

Plus précisément, il faut pouvoir les purifier avec une efficacité comprise entre 98,5% et 100% (selon la nature des polluants). Le terme « efficacité » désigne le rendement de décontamination E, qui est égal au rapport suivant :

$$E = \frac{(c_{init} - c_{res})}{c_{init}} x100$$

- Où $C_{init}$ est la concentration initiale en contaminant,

- Et $C_{res}$ est la concentration résiduelle en contaminant, i.e., la concentration en contaminant à l'issue de l'étape de purification.

Ces critères stricts de performances sont imposés par les réglementations des agences américaine et européenne FDA (acronyme de Food and Drug Administration en anglais) et EFSA (acronyme de European Food Security Authority en anglais).

Une manière simple et économique de purifier une composition solide de polymères contaminés est d'utiliser un extracteur dans lequel on introduit un fluide d'extraction à l'état supercritique.

Typiquement, le matériau contaminé est déposé dans l'extracteur, puis un flux de fluide à l'état supercritique est introduit à travers celui-ci. Lors de son passage à travers le matériau, il détache les contaminants en les dissolvant, et les emporte hors de l'extracteur et donc hors du matériau. L'état supercritique confère au fluide des propriétés de haute diffusivité, de faible viscosité et faible tension de surface, ainsi qu'une certaine modularité de la force du solvant qui favorisent particulièrement ce processus d'extraction. Les conditions d'extraction sont en outre relativement douces, du fait de température et de pression peu élevées, ce qui permet de ne pas dégrader le matériau.

La demande de brevet WO2018121980A1 décrit une telle technique au sein d'un procédé de purification d'une composition solide de polyoléfine contaminée. Précisément, l'extraction par fluide supercritique est mise en oeuvre dans une première étape du procédé, avec des conditions de température et de pression bien spécifiées. Pour obtenir des particules de polyoléfines de haute pureté, cette étape est ensuite suivie d'une étape de chauffage de la composition solide purifiée obtenue à l'issue de l'étape d'extraction puis d'une étape de production de particules par une solution saturée en gaz ou PGSS (acronyme de « Particules from Gas Saturated Solutions » en anglais). Cette étape de production de particules permet dans le même temps d'améliorer encore la pureté des polyoléfines.

Bien qu'un tel procédé permette d'obtenir des particules de polyoléfines recyclées de grande pureté, il reste complexe à mettre en oeuvre, notamment du fait que trois étapes (première purification par extraction, chauffage, production de particule/ deuxième purification) sont nécessaires.

Le document « Supercritical CO2 extraction of contaminants from polypropylene intended for food contact: Effects of contaminant molecular structure and processing parameters » de Ben Said Anouar et al., Journal of supercritical Fluids 98 (2016) 22-31, décrit un procédé de décontamination de polyoléfines comprenant une seule étape de purification par extraction par un fluide de CO2 supercritique.

Cependant, des rendements de décontamination satisfaisants (supérieurs à 99% pour tous les contaminants testés) ne sont obtenus qu'à la condition que la composition solide contaminée soit sous forme de films de 100 μm d'épaisseur. Lorsque cette composition contaminée est sous forme de granulés de diamètre équivalents de 2,5 mm, le rendement varie entre seulement 94,1% et 32,12 % selon les contaminants.

En pratique cependant, il est plutôt rare que la matière entrante se présente sous la forme de films. Elle est généralement plutôt sous la forme d'un broyé (flocons) provenant du déchiquetage des emballages de type flacons etc. La part de films est assez faible pour le polyéthylène et encore plus pour le polypropylène.

Cela signifie que, pour atteindre les efficacités de décontamination souhaitées en une seule étape d'extraction, il faudrait envisager de produire des films avec ces flocons. Une telle étape est techniquement complexe, et économiquement peu intéressante. En outre, il y a un risque non négligeable qu'au cours de celle-ci, de nouveaux contaminants soient introduits et que les polyoléfines soient encore dégradées.

Il reste donc un besoin d'améliorer les procédés de purification de polymères pour obtenir, de façon simple, une efficacité de décontamination supérieure à 98,5%, cela pour une grande variété de contaminants.

## RESUME DE L'INVENTION

L'invention offre une solution aux problèmes évoqués précédemment, en permettant de n'utiliser qu'une seule étape de purification par extraction par fluide supercritique en réduisant par micronisation la matière entrante en une poudre de particules ayant un diamètre équivalent compris entre 0,1 mm et 1 mm. On évite ainsi une étape de production de films.

Un aspect de l'invention concerne un procédé de décontamination d'une composition solide dite contaminée, issue de déchet post-consommation et/ou post-industrialisation, comprenant un polymère faisant partie de la famille des thermoplastiques et des contaminants, ledit procédé comprenant les étapes successives suivantes :

- Réduction par micronisation de la composition solide contaminée en particules ayant un diamètre compris entre 0,1 mm et 1 mm, pour obtenir une poudre comprenant le polymère et les contaminants,

- Chargement de la poudre obtenue dans un extracteur,

- Introduction, dans l'extracteur chargé en poudre, d'un écoulement continu d'un fluide supercritique, l'extracteur étant simultanément maintenu à une température comprise entre 40°C et 130°C et une pression comprise entre 80 bars et 450 bars pendant une durée comprise entre 5 min et 480 min, pour extraire physiquement les contaminants par le fluide supercritique et obtenir une composition solide dite décontaminée comprenant le polymère,

- Déchargement de la composition solide décontaminée de l'extracteur, lequel a été ramené à des conditions de température et de pression permettant son ouverture.

Ainsi, l'étape de purification par extraction par fluide supercritique est effectuée sur une poudre de particules de polymère contaminé, les particules ayant un diamètre compris entre 0,1 mm et 1 mm obtenu par une première étape de réduction par micronisation.

Par diamètre, on entend un diamètre de maille, mesuré par tamisage.

Les particules présentent une forme assimilable à une sphère, avec des contours rugueux, par exemple avec des contours qui présentent des facettes.

Ces propriétés géométriques diffèrent de celles des granulés. Ceux-ci présentent d'abord un rapport d'aspect supérieur à 1. Les granulés se présentent en effet soit en forme de sphère aplatie, soit en forme de cylindre. Par ailleurs, dans ce rapport, la dimension la plus petite varie entre 2 mm et 3 mm (la dimension la plus grande variant entre 3 mm et 4 mm pour la sphère aplatie, et entre 4 mm et 5 mm pour le cylindre). La taille des granulés est donc supérieure à celle des particules, et éloignée de la borne supérieure (1 mm) de la plage de diamètre obtenue à l'issue de l'étape de micronisation.

Des expériences effectuées dans le cadre de l'invention ont montré que, en effectuant la micronisation avant l'extraction (et non après, comme c'est souvent le cas pour obtenir des particules purifiées), en la spécifiant pour obtenir la plage de diamètre spécifiée pour les particules, et en choisissant les conditions de température, de pression et de durée dans l'extracteur, une décontamination rapide, par exemple 140 minutes, et extrêmement efficace, supérieure à 99%, de tous les contaminants testés peut être obtenue de façon simple.

Comme les particules ont un diamètre inférieur aux diamètre des granulés, la distance pour pénétrer à coeur de la particule est réduite, ce qui permet d'augmenter la vitesse de diffusion du fluide supercritique dans le polymère, et donc d'obtenir, en une seule étape de purification, de meilleures efficacités de décontamination.

Les résultats obtenus sur des films de polyoléfine, d'après l'état de l'art ou d'après les expériences relatives à l'invention, montrent qu'au-delà d'une épaisseur de 250 µm, certains contaminants parmi les plus lourds ne sont pas extraits efficacement. Ces résultats laissaient ainsi à penser que la plage de diamètre des particules devait aussi être restreinte à 100 µm - 200 µm. Or il s'est avéré, de manière surprenante, que la plage de diamètre des particules peut être étendue bien au-delà de 200 µm, précisément jusqu'à 1 mm.

Le fait de pouvoir étendre la plage de diamètre des particules jusqu'à 1 mm plutôt que de la limiter à 200 µm est particulièrement intéressant. En effet, l'étape de réduction par micronisation est rendue plus simple, et de ce fait, envisageable techniquement.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :

- la durée dans l'extracteur sous l'écoulement du fluide supercritique est comprise entre 5 min et 240 min.

- le fluide supercritique est à base de CO2 supercritique.

- le débit de l'écoulement du fluide supercritique est compris entre 0,1 Kg/h et 100 Kg/h, de préférence entre 0,1 Kg/h et 50 Kg/h.

- la composition solide contaminée se présente sous forme de granulés.

- une charge de 1 Kg à 10000 Kg de poudre comprenant le polymère et les contaminants est chargée dans l'extracteur.

- le polymère de la composition solide contaminée est une polyoléfine telle que du polypropylène (PP), ou du polyéthylène (PE), ou un mélange de polypropylène (PP) et de polyéthylène (PE) avec ou sans agent compatibilisant tel qu'un anhydride maléique.

- la polyoléfine de la composition contaminée présente des propriétés de viscosité à l'état fondu comprise entre 0,01 g/10 min et 200 g/10 min.

- la composition solide contaminée comprend des contaminants organiques volatils dans une teneur égale au maximum à 5000 ppm, et/ou des contaminants organiques non-volatils dans une teneur égale au maximum à 2000 ppm.

- la composition solide contaminée comprend d'autres polluants que les contaminants à purifier, tels que :

    - copolymère d'éthylène alcool vinylique ou EVOH dans une proportion au maximum égale à 10% en masse,

    - polyamide ou PA dans une proportion au maximum égale à 10% en masse,

    - polyéthylène téréphtalate ou PET dans une proportion au maximum égale à 10% en masse, ou

    - Aluminium, dans une proportion au maximum égale à 5% en masse.

- un co-solvant, tel que le méthanol, l'éthanol ou l'eau, est introduit dans l'extracteur, simultanément au fluide supercritique pendant l'étape d'extraction.

- le fluide supercritique est déchargé de l'extracteur, puis séparé, dans un séparateur, des contaminants qui ont été dissous dans le fluide supercritique lors de l'extraction, puis réinjecté dans l'extracteur de sorte qu'il est recyclé.

- à l'issue de l'étape d'extraction, les contaminants sont extraits avec une efficacité supérieure à 99%.

- à l'issue de l'étape de déchargement de la composition solide décontaminée, le procédé comprend une étape supplémentaire d'extrusion pour former des granulés de polymère décontaminés à partir de la composition solide décontaminée.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- [Fig. 1] est un schéma synoptique illustrant l'enchaînement des étapes du procédé de décontamination selon l'invention,

- [Fig. 2] est un schéma synoptique illustrant l'enchaînement des sous-étapes de la deuxième étape du procédé de la figure 1,

- [Fig. 3] est une représentation schématique d'un système permettant de mettre en oeuvre le procédé selon l'invention.

**DESCRIPTION DETAILLEE**

Sauf précision contraire, un même élément apparaissant sur des figures différentes présente une référence unique.

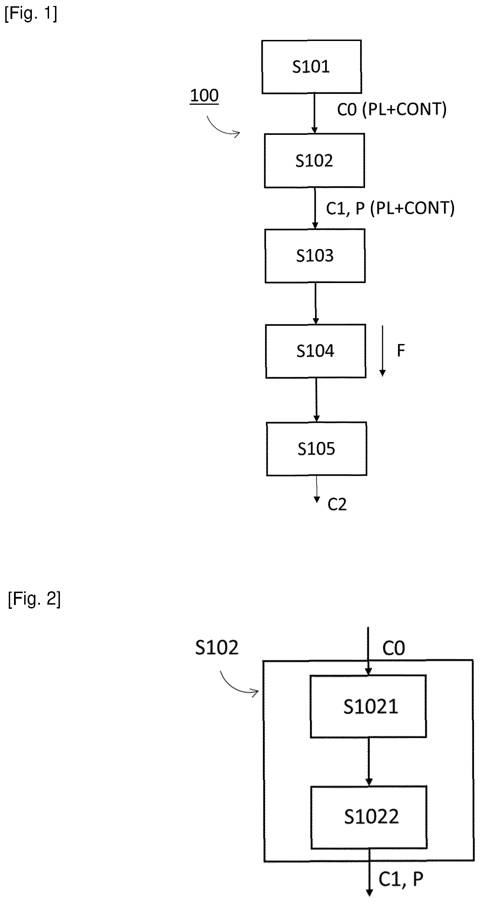

La figure 1 représente de façon schématique l'enchaînement des étapes d'un mode préférentiel de mise en oeuvre du procédé 100 de décontamination de polymères selon l'invention.

Ce procédé 100 est en particulier remarquable en ce qu'il permet d'obtenir des particules de polymères de haute pureté tout en étant rapide et simple à mettre en oeuvre.

En référence à la figure 1, le procédé comprend les étapes principales successives S101, S102, S103, S104 et S105.

Le procédé 100 débute avec l'étape S101 qui est une étape de fourniture d'une composition solide de polymère contaminée, dite composition contaminée C0, comprenant un polymère PL et des contaminants CONT.

La composition contaminée C0 est issue du déchiquetage de déchets de post-consommation et de post-industrialisation. Les déchets de post-consommation sont par exemple des emballages de produits de consommation, par exemple des emballages de type flacons, bouteilles de lait, sachets alimentaires, barquettes alimentaires, etc. provenant d'un flux de tri de « post-consommation ». Les déchets de post-industrialisation sont issus d'un autre flux de tri, dit post-industriel, et concernent des rebus et de chutes de production.

La composition contaminée C0 est de niveau « food grade » lorsque les emballages sont à l'origine alimentaires (ceux qui sont en contact direct avec les aliments) ou sont utilisés généralement par la cosmétique (gel douche, shampoings, etc.), et de niveau « non-food grade » sinon. Les niveaux « food-grade » et « non-food grade » sont indicatifs d'un niveau de contamination de la matière plastique.

La composition contaminée C0 est solide, c'est-à-dire qu'elle se présente sous forme solide (granulés, flocons, films, etc.). Le terme « solide » exclut des formes de composition contaminée liquide, fluide, ou encore gazeuse. La composition solide contaminée n'est par exemple pas une composition fondue.

De préférence, la composition contaminée C0 se présente sous la forme de granulés. Ces granulés peuvent être procurés par les usines, à l'issue d'étapes de tri et d'extrusion.

Les propriétés géométriques (forme et taille) des granulés sont décrites ci-après.

La forme des granulés est principalement de deux types. Lorsque le mode d'extrusion est en « coupe en tête », la forme est généralement une sphère aplatie. Lorsque le mode est en « coupe à jonc », la forme est généralement un cylindre.

Ces formes s'éloignent de la forme d'une sphère. En effet, la taille dans au moins une dimension diffère de manière significative de celle des autres dimensions. Ainsi, dans le cas des granulés en forme de sphère aplatie, l'épaisseur varie entre 2 mm et 3 mm, et la largeur varie entre 3 mm et 4 mm. Dans le cas des granulés en forme de cylindre, la largeur varie entre 2 mm et 3 mm et la longueur varie entre 4 mm et 5 mm.

Ces formes présentent ainsi un rapport d'aspect, défini comme le rapport de la plus grande dimension (largeur de la sphère aplatie, longueur du cylindre) sur la plus petite dimension (épaisseur de la sphère aplatie, largeur du cylindre), qui est supérieur à 1. Dans le cas des particules, le rapport d'aspect est considéré comme égal à 1.

Dans la suite de la description, on se référera à la dimension la plus petite pour désigner la taille d'un granulé.

La composition contaminée C0 peut aussi se présenter broyée, sous forme de flocons (ou « flakes » en anglais). Les flocons ont typiquement des dimensions de l'ordre de 2 cm à 4 cm, par exemple 2 cm. Les flocons présentent généralement des surfaces comprises entre 0,5 cm$^2$ et 4 cm$^2$ sur des épaisseurs comprises entre 0,5 mm et 2 mm.

La composition contaminée C0 peut aussi se présenter sous forme de fibres, ou de films.

Le polymère PL de la composition contaminée C0 fait partie de la famille des composés thermoplastiques, c'est-à-dire des composés dont la structure et la viscosité peuvent être modifiées par chauffage et refroidissement successifs, de façon réversible.

Le polymère PL fait plus particulièrement partie de la famille des polyoléfines.

Les polyoléfines ont des structures basées sur la répétition de motifs unitaire. Ces motifs unitaires proviennent généralement d'hydrocarbures. Ces structures possèdent des chaines carbonées et des répétitions de motif unitaire comprises entre 1000 et 1 000 000 000 ou plus d'unité. Au-dessous de ce nombres d'unité de répétition ces structures sont appelées généralement des oligomères.

Le polymère est plus particulièrement une polyoléfine telle que le polyéthylène ou PE, ou le polypropylène (PP), ou un copolymère (PE/PP) ou un mélange de polypropylène et de polyéthylène (PP+PE) avec ou sans agent compatibilisant. Un exemple d'agent compatibilisant est un anhydride maléique.

Quelle que soit la polyoléfine, celle-ci présente une viscosité à l'état fondu comprise entre 0,01 g/10 min et 200 g/10 min. Cette viscosité est aussi désignée sous le terme d'indice de fluidité à chaud ou MFI (acronyme de « Mass Flow Index » en anglais) selon le standard ISO 1133.

Le polyéthylène est l'une des résines thermoplastiques les plus répandues dans le monde. On l'utilise notamment pour fabriquer des sacs, des films, des flacons, des casiers à bouteilles, des jouets, des seaux, des cuvettes, des tuyaux souples ou des citernes.

Le polyéthylène est obtenu par polymérisation de l'éthylène et se présente sous la forme d'un solide d'aspect cireux, totalement incolore et inodore. Il est soluble à partir de 60-80° dans certains solvants organiques et devient cassant à partir de -25°C. Il n'est généralement pas plastifié.

Le terme de polyéthylène désigne plusieurs types de polyéthylène, parmi lesquels : le polyéthylène basse densité PEBD, le polyéthylène moyenne densité ou PEMD, le polyéthylène haute densité ou PEHD, le polyéthylène à poids moléculaire ultra-haut ou UHMWPE (acronyme de « Ultra-High molecular Weigh Polyethylene » en anglais), le polyéthylène linéaire basse densité ou LPEBS, le polyéthylène cireux ou WaxPE (acronyme de « Wax Polyethylene » en anglais).

Le polyéthylène basse densité PEBD a une densité comprise entre 0,91 $g/cm^3$ et 0,925 $g/cm^3$.

Le polyéthylène linéaire basse densité LPEBD a une densité comprise entre 0,91 $g/cm^3$-0,9 $g/cm^3$.

Le polyéthylène linéaire moyenne densité LPEMD a une densité comprise entre 0,926 $g/cm^3$ et 0,94 $g/cm^3$.

Le polyéthylène haute densité PEHD a une densité comprise entre 0,941 $g/cm^3$ et 9,965 $g/cm^3$.

Le polypropylène PP sert notamment à produire des emballages rigides (barquettes, pots, bouchons, etc.).

Le polypropylène est obtenu par polymérisation du propylène. Il offre une résistance importante à la chaleur et fond vers 160°C ou 170°C.

Le terme de polypropylène désigne plusieurs types de polypropylène sont le polypropylène homopolymère et polypropylène copolymère et le polypropylène cireux ou Wax PP (acronyme de « Wax Polypropylene » en anglais).

Les contaminants de la composition contaminée C0 sont typiquement des molécules organiques volatiles, c'est-à-dire des molécules de masse moléculaire comprise entre 0 g/mol à 500 g/mol, ou/et des molécules organiques non volatiles, de masse moléculaire supérieure à 500 g/mol.

Ces molécules sont généralement présentes dans des stabilisants, des lubrifiants, des plastifiants, des charges et des pigments ajoutés pendant la fabrication des emballages, ou plus généralement du plastique. Elles peuvent aussi provenir de la migration de produits en contacts avec les emballages (contenus), par exemple matière grasse d'un aliment, molécules présentes dans les aliments telles que le limonène, etc.

Le niveau de contamination maximum dépend de la molécule organique. Il correspond au niveau de contamination maximum pour lequel le procédé 100 permet d'obtenir une décontamination efficace à plus de 99%, comme il sera décrit plus loin dans la description.

Pour les molécules organiques volatiles, le niveau de contamination maximum correspond à une teneur maximum égale à 5000 ppm.

Pour les molécules organiques non volatiles, le niveau de contamination maximum correspond à une teneur maximum égale à 2000 ppm.

La composition solide contaminée peut en outre comprendre d'autres polluants que les contaminants à purifier, tels que :

- Un copolymère d'éthylène alcool vinylique ou EVOH, dans une proportion au maximum égale à 10%, en masse

- Un polyamide ou PA (aussi connu sous le nom de nylon) dans une proportion au maximum égale à 10% en masse,

- Du polyéthylène téréphtalate ou PET, dans une proportion au maximum égale à 10% en masse, ou

- De l'aluminium, dans une proportion au maximum égale à 5% en masse.

En référence à la figure 1 et à la figure 2, le procédé 100 se poursuit avec l'étape S102, qui est une étape de réduction par micronisation de la composition contaminée fournie à l'étape S101 précédente.

Cette étape S102 vise à produire, par réduction par micronisation de la composition contaminée, une poudre C1 de particules P comprenant le polymère et les contaminants.

De façon générale, la micronisation est une technique qui permet de réduire la composition contaminée en particules P.

Dans le cadre du procédé 100, la micronisation est adaptée pour que les particules P obtenues aient un diamètre compris entre 0,1 mm et 1 mm. Dit autrement, la micronisation est adaptée pour que la poudre formée par les particules présente une distribution granulométrique qui s'étend entre 0,1 mm et 1 mm, sans contrainte quant à la position de la fréquence la plus élevée au sein de cette plage.

Les particules P ont une forme assimilable à une sphère aux contours pouvant être rugueux (ou présentant des facettes). Le diamètre est un diamètre de maille (c'est-à-dire un diamètre de sphère équivalente), mesuré par tamisage. La distribution granulométrique de la poudre est une distribution en masse.

En référence à la figure 2, lorsque la composition contaminée C0 est fournie sous forme de granulés ou de flocons, la micronisation est par exemple mise en oeuvre par une étape de pulvérisation S1021 puis une étape de tamisage S1022.

La pulvérisation est réalisée dans des appareils appelés « microniseurs ». Ces machines à deux plaques (l'une fixe, et l'autre mobile) soufflent les granulés ou les flocons sur les parois par l'action de la force centrifuge, avant qu'un rotor ne vienne éclater la matière de façon périphérique.

Le tamisage est effectué sur cette matière pulvérisée pour obtenir la granulométrie recherchée.

La poudre C1 peut être stockée à l'issue de cette étape S120.

Les contaminants CONT ne sont pas extraits au cours de cette étape S120.

La composition contaminée C0 peut être homogénéisée avant la pulvérisation (non représentée en figure 2).

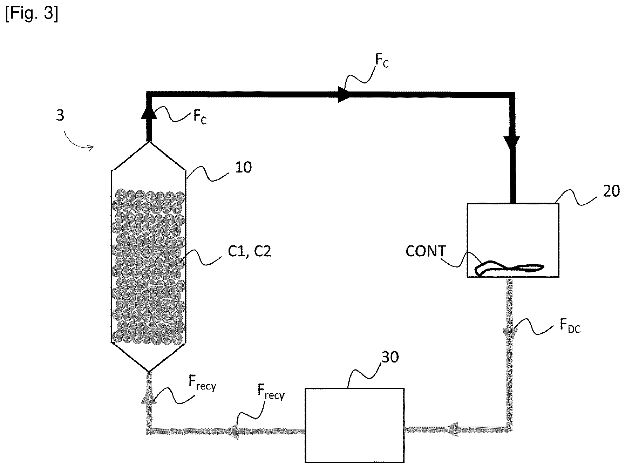

La figure 3 représente un système pour la mise en oeuvre du procédé 100 selon l'invention comportant :

- un extracteur 10,

- un séparateur 20,

- un compresseur 30.

En référence à la figure 1 et à la figure 3, le procédé 100 se prolonge avec l'étape S103 qui consiste à charger la poudre C1 de particules P comprenant le polymère PL et les contaminants CONT dans l'extracteur 10 du système 3.

Une charge de 1 Kg à 10000 Kg de la poudre C1 de particules P peut être chargée dans cet extracteur 10.

Toujours en référence à la figure 1 et à la figure 3, l'étape S104 prolonge l'étape S103.

L'étape S104 est une étape de purification des contaminants par extraction par un fluide supercritique des contaminants.

Pour cela, un écoulement continu d'un fluide supercritique F est introduit dans l'extracteur 10 chargé en poudre C1, l'extracteur 10 étant simultanément maintenu à une température comprise entre 40°C et 130°C et une pression comprise entre 80 bars et 450 bars pendant une durée comprise entre 5 min et 480 min.

Cette durée dans l'extracteur 10 sous flux du fluide supercritique est de préférence comprise entre 5 min et 240 min.

Par exemple, la température, la pression et la durée dans l'extracteur sous flux de fluide supercritique sont respectivement 80°C, 300 bars, et 240 min.

Le débit de l'écoulement du fluide supercritique F est compris entre 0,1 Kg/h et 100 Kg/h. De préférence il est compris entre 0,1 Kg/h et 50 Kg/h, par exemple il est égal à 50 Kg/h.

Le fluide supercritique dissout et extrait physiquement les contaminants hors de la poudre C1.

Ainsi, à l'issue de cette étape S104 d'extraction par fluide supercritique, la composition C2 présente dans l'extracteur 10 est une poudre de particules similaire à la poudre C1 contaminée du point de vue de sa distribution granulométrique, mais différente de cette poudre C1 en ce qu'elle ne comporte plus une partie des contaminants. Pour cette raison, la poudre obtenue à l'issue de l'étape S104 d'extraction est appelée composition solide décontaminée C2.

Le fluide supercritique est de préférence du dioxyde de carbone (CO2) supercritique. Il s'agit en effet d'un fluide économique, propre et ayant des propriétés supercritiques sous des températures et pressions suffisamment basses pour ne pas engendrer de dégradation du polymère de la poudre C1.

Le fluide supercritique peut être aussi un autre fluide qu'un fluide à base de C02, par exemple il peut s'agir d'un fluide supercritique à base d'eau ($H_2O$), d'ammoniac ($NH_3$), ou protoxyde d'azote ($N_2O$).

En référence à la figure 3, le fluide supercritique Fc contenant la partie des contaminants extraits est préférentiellement déchargé de l'extracteur 10, puis séparé, dans un séparateur 20, de ces contaminants CONT. Cette étape de séparation requiert généralement une phase de décompression durant laquelle le fluide supercritique redevient un gaz, ce gaz étant généralement moins dense que les molécules contaminantes, ces dernières se condensent. Le gaz peut être ensuite filtré pour être purifié et ensuite être de nouveau utilisé dans le procédé 100. Le fluide supercritique ainsi décontaminé $F_{DC}$ est ensuite réinjecté, via un compresseur 30, dans l'extracteur 10 de sorte que le fluide supercritique est un fluide recyclé $F_{recycl}$.

Le procédé 100 est ainsi économique.

Un co-solvant (non représenté sur la figure 1 ou sur la figure 3), tel que le méthanol, l'éthanol ou l'eau, peut en outre être introduit dans l'extracteur 10, simultanément au fluide supercritique pendant cette étape S104 d'extraction. Ce co-solvant permet de rincer les contaminants se trouvant en surface des particules P, ce qui augmente l'efficacité d'extraction des contaminants.

L'étape S104 d'extraction par fluide supercritique est effectuée en mode « batch » (ou par lot), ce qui est un mode de production avantageux.

Comme illustré sur la figure 1, le procédé 100 se poursuit avec l'étape S105, qui consiste à décharger la composition solide décontaminée C2 de l'extracteur 10, lequel a été ramené à des conditions de température et de pression permettant son ouverture.

Comme il sera décrit ci-après avec les résultats d'expériences réalisées dans le cadre de l'invention, le procédé 100 permet de réaliser de façon simple une décontamination rapide, par exemple en 140 minutes, et extrêmement efficace, supérieure à 99%, de tous les contaminants testés.

Ainsi, à l'issue de l'étape S105 du procédé 100, on obtient une poudre de particules de polymère de haute pureté permettant notamment une utilisation dans le domaine de l'alimentaire.

Le procédé 100 est discontinu ou en « batch » : la composition contaminée C0 est en effet décontaminée par lots successifs. Ce mode de production permet d'avoir une traçabilité simple et précise, et apporte une flexibilité de production.

Cette étape S105 peut être suivie d'une étape supplémentaire (non représentée sur la figure 1) d'extrusion pour former des granulés de polymère décontaminés à partir de la composition solide décontaminée.

Cette étape S105 peut être répétée plusieurs fois de manière à augmenter encore l'efficacité de décontamination dans le cas où la contamination initiale serait anormalement élevée.

Les expériences menées dans le cadre de l'invention sont décrites ci-après.

Dans ces expériences, la composition contaminée C0 est spécifiquement élaborée pour comprendre un polymère et un contaminant dit « modèle », c'est-à-dire dont on connait le poids moléculaire et la concentration dans la composition contaminée.

Le polymère PL choisi est du polypropylène PP dit de grade extrusion avec les caractéristiques suivantes MFR (@ 230°C/2.16kg) / ISO 1133 / 0.85 g/10min).

Le contaminant modèle est une molécule dont le poids moléculaire est proche des contaminants ciblés. Sa concentration est choisie pour être proche des concentrations cibles prescrites par les lignes directrices de l'agence européenne de sécurité EFSA concernant les procédés de recyclage.

Précisément, quatre contaminants modèles $CONT_1$, $CONT_2$, $CONT_3$ et $CONT_4$ sont choisis pour élaborer, respectivement, quatre compositions contaminées $C0_1$, $C0_2$, $C0_3$, $C0_4$, chacune de ces compositions ayant soit la forme de granulés, dans les dimensions et formes décrites précédemment, soit la forme de films. Deux épaisseurs de films sont obtenues : 100 $\mu$m et 250 $\mu$m.

Les caractéristiques de ces compositions contaminées $C0_1$, $C0_2$, $C0_3$, $C0_4$ sont décrites dans le tableau suivant.

[tableau 1]

| | $C0_1$ | $C0_2$ | $C0_3$ | $C0_4$ |
|---|---|---|---|---|
| Polymère PL | PP | | | |
| Contaminant CONT | CONT1 | CONT2 | CONT3 | CONT4 |
| Poids moléculaire du contaminant (g/mol) | 200 -300 | 400-500 | 750-800 | 750-800 |
| Concentration en contaminant (mg/kg) | 855 | 721 | 458 | 857 |
| Masse de la composition contaminée (Kg) | 300 | 300 | 300 | 300 |
| Forme de la composition contaminée | Granulés | Granulés | Granulés | Granulés |
| | Film 250 $\mu$m | Film 250 $\mu$m | Film 250 $\mu$m | Film 250 $\mu$m |
| | Film 100 $\mu$m | Film 100 $\mu$m | Film 100 $\mu$m | Film 100 $\mu$m |

On met en oeuvre le procédé 100 tel que décrit précédemment à partir de chacune des compositions contaminées $C0_1$, $C0_2$, $C0_3$, $C0_4$ sous forme de granulés.

A l'issue de l'étape de réduction par micronisation S102, on obtient quatre poudres $C1_1$, $C1_2$, $C1_3$ et $Cl4$ de

particules ayant un diamètre compris entre 0,1 mm et 1 mm, correspondant à la micronisation respectivement des compositions contaminées $C0_1$, $C0_2$, $C0_3$, $C0_4$. Le tableau suivant illustre le résultat d'une mesure de de distribution de granulométrie de l'une de ces poudres, cette mesure étant effectuée par tamisage.

[Tableau 2]

| Diamètre de maille mesuré | Pourcentage |
|---|---|
| > 1,50 mm | 8,9 % |
| > 1,00 mm | 14,5 % |
| > 0,80 mm | 13,1 % |
| > 0,71 mm | 13,0 % |
| > 0,63 mm | 12,4 % |
| > 0,50 mm | 17,6 % |
| < 0,50 mm | 20,4 % |

Lors de l'étape d'extraction S104, on utilise l'extracteur 10 du système 3 d'extraction, le CO2 supercritique comme fluide supercritique $F_{recy}$, et des conditions de température, de pression et de durée comprise dans les plages spécifiées par le procédé 100. Précisément, la pression est 300 bar, la température 80°C, la durée 140 min.

A l'issue de l'étape S105 de déchargement de la composition décontaminée on obtient quatre poudres de particules de PP décontaminées $C2_1$, $C2_2$, $C2_3$ et $C2_4$.

Pour comparer les performances du procédé 100 avec un procédé qui ne comprendrait pas l'étape S102 de réduction par micronisation de la composition contaminée, on met aussi en oeuvre, à partir de chacune des compositions contaminées sous forme de granulés et sous forme de films, uniquement les étapes S103, S104 et S105 du procédé 100.

On utilise alors le même système 3 que pour le procédé 100, le même fluide supercritique $F_{recy}$, ainsi que des conditions de température, de pression et de durée similaires à celles utilisées dans le procédé 100 (300 bar, 80°C ou 90°C, 140 min).

On obtient alors des compositions solides décontaminées correspondant à l'extraction par fluide supercritique des granulés et des films.

Le rendement de décontamination est ensuite déterminé sur chaque de ces compositions solides décontaminées.

Pour cela, chaque composition solide décontaminée est injectée et analysée quantitativement par chromatographie gazeuse couplée à un spectre de masse haute résolution ou GCMS-HR (acronyme de « Gas Chromatography Mass Spectroscopy High Resolution » en anglais).

La limite de détection des contaminants correspond à la limite de détection de l'appareil de chromatographie : les contaminants sont considérés comme non détectés lorsqu'aucun des composés modèles n'est détecté sur les chromatogrammes correspondant après extraction par CO2 supercritique.

Les rendements de décontamination ainsi mesurés sont donnés dans la tableau suivant.

[tableau 3]

| Composition entrante dans l'extracteur | Rendement de décontamination (%) | | | |
|---|---|---|---|---|
| | CONT1 | CONT2 | CONT3 | CONT4 |
| Poudre de particules micronisées PP contaminées (Procédé 100) | 99,7 | 99,8 | 99,6 | 99,3 |
| Granulés PP contaminés | 98,9 | 84,8 | 63,8 | 53,5 |
| Film 250 $\mu$m PP contaminé | 99,4 | 98,4 | 95,8 | 92,4 |
| Film 100 $\mu$m PP contaminé | 99,4 | 99,5 | 98,1 | 97,4 |

Ainsi, grâce à la micronisation des compositions contaminées, cela avant l'extraction (et non après, comme c'est souvent le cas pour obtenir des particules purifiées), et en spécifiant cette micronisation pour obtenir la plage de diamètre 0,1 mm - 1 mm pour les particules, une décontamination en 140 minutes, et extrêmement efficace, supérieure à 99%, de tous les contaminants testés est obtenue. Dit autrement, une décontamination rapide et efficace est obtenue de façon simple, cela quels que soient les contaminants testés.

Dans ces mêmes conditions de température, pression et durée dans l'extracteur, une efficacité moindre, inférieure à l'efficacité ciblée, est obtenue lorsque la micronisation n'est pas réalisée et que la matière entrante dans l'extracteur est sous forme de granulés ou de films.

Des expériences complémentaires ont montré qu'en utilisant comme matière entrante les films, il était possible d'effectuer une décontamination aussi efficace, celle-ci étant toutefois plus lente. Il faut en effet augmenter le temps dans l'extracteur à 480 min pour mesurer un rendement de décontamination égal à 99,8% pour chacun des contaminants CONT1 , CONT2, CONT3 et CONT4.

Par ailleurs, ces expériences ont montré qu'en utilisant comme matière entrante les granulés, il n'était pas possible d'atteindre les efficacités ciblées pour tous les contaminants, cela même en augmentant la durée dans l'extracteur. On mesure ainsi, pour une durée dans l'extracteur de 480 min, un rendement de décontamination de 99,8% pour les contaminants les plus légers CONT1 et CONT2, mais un rendement inférieur à 99%, précisément égal à 93,8% et 89,8% pour les contaminants CONT3 et CONT4 les plus lourds. La décontamination n'est donc pas assez efficace ni robuste vis-à-vis des différents contaminants testés.

**Revendications**

1.  Procédé (100) de décontamination d'une composition solide dite contaminée (C0), issue de déchet post-consommation et/ou post-industrialisation, comprenant un polymère (PL) faisant partie de la famille des thermoplastiques et des contaminants (CONT), ledit procédé comprenant les étapes successives suivantes :

    - Réduction par micronisation (S102) de la composition solide contaminée (C0) en particules (P) ayant un diamètre compris entre 0,1 mm et 1 mm, pour obtenir une poudre (C1) comprenant le polymère (PL) et les contaminants (CONT),
    - Chargement (S103) de la poudre (C1) obtenue dans un extracteur (10),
    - Introduction, dans l'extracteur (10) chargé en poudre (C1), d'un écoulement continu d'un fluide supercritique (F, $F_{recy}$), l'extracteur (10) étant simultanément maintenu à une température comprise entre 40°C et 130°C et une pression comprise entre 80 bars et 450 bars pendant une durée comprise entre 5 min et 480 min, pour extraire (S104) physiquement les contaminants (CONT) par le fluide supercritique (F, $F_{recy}$) et obtenir une composition solide dite décontaminée (C2) comprenant le polymère (PL),
    - Déchargement de la composition solide décontaminée (C2) de l'extracteur (10), lequel a été ramené à des conditions de température et de pression permettant son ouverture.

2.  Procédé (100) de décontamination selon la revendication 1, dans lequel le fluide supercritique (F, $F_{recy}$) est à base de CO2 supercritique.

3.  Procédé (100) de décontamination selon l'une des revendications 1 à 2, dans lequel le débit de l'écoulement du fluide supercritique (F, $F_{recy}$) est compris entre 0,1 Kg/h et 100 Kg/h, de préférence entre 0,1 Kg/h et 50 Kg/h.

4.  Procédé (100) de décontamination selon l'une des revendications 1 à 3, dans lequel la composition solide contaminée (C0) se présente sous forme de granulés.

5.  Procédé (100) de décontamination selon l'une des revendications 1 à 4, dans lequel une charge de 1 Kg à 10000 Kg de poudre (C1) comprenant le polymère (PL) et les contaminants (CONT) est chargée dans l'extracteur.

6.  Procédé (100) de décontamination selon l'une des revendications 1 à 5, dans lequel le polymère (PL) de la composition solide contaminée (C0) est une polyoléfine telle que du polypropylène (PP), ou du polyéthylène (PE), ou un mélange de polypropylène (PP) et de polyéthylène (PE) avec ou sans agent compatibilisant tel qu'un anhydride maléique.

7.  Procédé (100) de décontamination selon la revendication 6, dans lequel la polyoléfine de la composition contaminée (C0) présente des propriétés de viscosité à l'état fondu comprise entre 0,01 g/10 min et 200 g/10 min.

8.  Procédé (100) de décontamination selon l'une des revendications 1 à 7, dans lequel la composition solide contaminée (C0) comprend des contaminants organiques volatils dans une teneur égale au maximum à 5000 ppm, et/ou des contaminants organiques non-volatils dans une teneur égale au maximum à 2000 ppm.

9.  Procédé (100) de décontamination selon l'une des revendications 1 à 8, dans lequel la composition solide contaminée (C0) comprend d'autres polluants que les contaminants à purifier, tels que :

- copolymère d'éthylène alcool vinylique ou EVOH dans une proportion au maximum égale à 10% en masse,
- polyamide ou PA dans une proportion au maximum égale à 10% en masse,
- polyéthylène téréphtalate ou PET dans une proportion au maximum égale à 10% en masse, ou
- Aluminium, dans une proportion au maximum égale à 5% en masse.

10. Procédé (100) de décontamination selon l'une des revendications 1 à 9, dans lequel un co-solvant, tel que le méthanol, l'éthanol ou l'eau, est introduit dans l'extracteur, simultanément au fluide supercritique pendant l'étape d'extraction.

11. Procédé (100) de décontamination selon l'une des revendications 1 à 10, dans lequel le fluide supercritique ($F$, $F_{recy}$) est déchargé de l'extracteur, puis séparé, dans un séparateur, des contaminants qui ont été dissous dans le fluide supercritique lors de l'extraction, puis réinjecté dans l'extracteur de sorte qu'il est recyclé.

12. Procédé (100) de décontamination selon l'une des revendications 1 à 11, dans lequel, à l'issue de l'étape (S104) d'extraction, les contaminants (CONT) sont extraits avec une efficacité supérieure à 99%.

[Fig. 1]

```
                              ┌──────────┐
                              │   S101   │
                              └──────────┘
   100                             │
      ↘                            │ C0 (PL+CONT)
                                   ▼
                              ┌──────────┐
                              │   S102   │
                              └──────────┘
                                   │
                                   │ C1, P (PL+CONT)
                                   ▼
                              ┌──────────┐
                              │   S103   │
                              └──────────┘
                                   │
                                   ▼
                              ┌──────────┐      │
                              │   S104   │      │ F
                              └──────────┘      ▼
                                   │
                                   ▼
                              ┌──────────┐
                              │   S105   │
                              └──────────┘
                                   │
                                   ▼ C2
```

[Fig. 2]

```
   S102          C0
      ↘      ┌────────┼───────────┐
             │        ▼           │
             │   ┌──────────┐     │
             │   │  S1021   │     │
             │   └──────────┘     │
             │        │           │
             │        ▼           │
             │   ┌──────────┐     │
             │   │  S1022   │     │
             │   └──────────┘     │
             └────────┼───────────┘
                      │ C1, P
                      ▼
```

[Fig. 3]

Europäisches
Patentamt

European
Patent Office

Office européen
des brevets

# RAPPORT DE RECHERCHE EUROPEENNE

Numéro de la demande

EP 24 16 4544

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 100 536 975 C (UNIV XIAMEN [CN]) 9 septembre 2009 (2009-09-09) * revendications 4-8 * * page 6, ligne 25 * * page 7, ligne 3 - ligne 7 * * page 8 - page 19; exemples 1-87 * ----- | 1-12 | INV. C08J11/06 B01D11/02 B29B17/02 C08J11/08 B29B13/10 |
| X | US 2020/087479 A1 (YAO YUXIANG [CA] ET AL) 19 mars 2020 (2020-03-19) * revendications 1-6 * * alinéa [0016] - alinéa [0018] * * alinéa [0109] - alinéa [0111] * * alinéa [0143] * * alinéa [0158] - alinéa [0172] * * alinéa [0117] * * figures 3-5 * ----- | 1-12 | |

| DOMAINES TECHNIQUES RECHERCHES (IPC) |
|---|
| C08J B29B B01D |

Le présent rapport a été établi pour toutes les revendications

| Lieu de la recherche | Date d'achèvement de la recherche | Examinateur |
|---|---|---|
| La Haye | 25 octobre 2024 | Costantini, Nicola |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    .................................................................
& : membre de la même famille, document correspondant

EPO FORM 1503 03.82 (P04C02)

**EP 4 474 414 A1**

## ANNEXE AU RAPPORT DE RECHERCHE EUROPEENNE
## RELATIF A LA DEMANDE DE BREVET EUROPEEN NO.

EP 24 16 4544

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-10-2024

| Document brevet cité au rapport de recherche | Date de publication | Membre(s) de la famille de brevet(s) | Date de publication |
|---|---|---|---|
| CN 100536975 C | 09-09-2009 | AUCUN | |
| US 2020087479 A1 | 19-03-2020 | CA 3055974 A1 | 18-03-2020 |
| | | US 2020087479 A1 | 19-03-2020 |

Pour tout renseignement concernant cette annexe : voir Journal Officiel de l'Office européen des brevets, No.12/82

15

EP 4 474 414 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018121980 A1

**Littérature non-brevet citée dans la description**

- **BEN SAID ANOUAR et al.** Supercritical CO2 extraction of contaminants from polypropylene intended for food contact: Effects of contaminant molecular structure and processing parameters. *Journal of supercritical Fluids,* 2016, vol. 98, 22-31